# EUROPÄISCHE PATENTSCHRIFT

(11) **EP 1 485 622 B1**
(45) Veröffentlichungstag und Bekanntmachung des Hinweises auf die Patenterteilung: **27.07.2005**
(21) Anmeldenummer: 02795207.6
(22) Anmeldetag: 17.12.2002
(51) Int. Cl.: F04D 19/04, C04B 41/48, C25D 11/18, F01D 5/28, F04D 29/02

(54) **VERFAHREN ZUR BESCHICHTUNG VON GEGENSTÄNDEN**
METHOD FOR COATING OBJECTS
PROCEDE D'ENDUCTION D'OBJETS

(30) Priorität: 22.12.2001 DE 10163864
(43) Veröffentlichungstag der Anmeldung: 15.12.2004
(73) Patentinhaber: Leybold Vacuum GmbH, 50968 Köln (DE)
(72) Erfinder: HEPPEKAUSEN, Josef, 50389 Wesseling (DE); SCHULTE, Frank, 51105 Köln (DE)
(74) Vertreter: Jönsson, Hans-Peter, Dr.Dipl.-Chem.
(86) Internationale Anmeldenummer: PCT/EP2002/014375
(87) Internationale Veröffentlichungsnummer: WO 2003/056187

(56) Entgegenhaltungen:
- DE-A- 1 621 936
- DE-A- 4 239 391
- US-A- 5 487 825

## Beschreibung

Die Erfindung betrifft ein Verfahren zur Beschichtung von Gegenständen aus Ventilmetallen aus Al, Mg, Ti, Nb und/oder Zr oder deren Legierungen sowie die so erhältlichen Gegenstände.

Die EP 0 545 230 A1 betrifft ein Verfahren zur Erzeugung von gegebenenfalls modifizierten Oxidkeramikschichten auf Sperrschicht-bildenden Metallen und damit erhaltene Gegenstände. Um die Dicke und Verschleißfestigkeit von Oxidkeramikschichten auf Sperrschicht-bildenden Metallen zu erhöhen, wird eine plasmachemische anodische Oxidation in einem chloridfreien Elektrolytbad mit einem pH-Wert von 2 bis 8 bei konstanter Stromdichte von mindestens 1 A/dm² durchgeführt, bis sich die Spannung auf einen Endwert einstellt. Auf Gegenständen aus Aluminium oder Aluminiumlegierungen kann eine Oxidkeramikschicht erzeugt werden, die aus Korund besteht. Auch auf Magnesium und Titanium werden Schichtdicken bis zu 150 µm erreicht.

Für viele Anwendungen müssen hochbelastete Bauteile aus Ventilmetallen auch unter extremen Bedingungen korrosionsbeständig und verschleißfest sein. Das gelingt, in dem man derartige Gegenstände mit einer Oxidkeramikschicht mit einem weitmaschigen verknüpften Kapillarsystem versieht, Teilchen von Fluorpolymeren einbringt, die wenigstens in einer Dimension kleiner sind als der Durchmesser der Kapillaren und den Gegenstand mit dem vorgefüllten Kapillarsystem wechselnden Druckbedingungen aussetzt.

DE 41 24 730 C2 betrifft ein Verfahren zur Einlagerung von Fluorpolymeren in mikroporöse, durch anodische Oxidation hergestellte Oberflächen von Gegenständen aus Aluminium oder dessen Legierungen, dadurch gekennzeichnet, dass eine wässrige Suspension von Fluorpolymeren oder deren Vorstufe mit einer Teilchengröße von 1 bis 50 nm in die senkrecht zum Metall stehenden Kapillaren einer Harteloxalschicht eingelagert werden.

Die DE 42 39 391 C2 betrifft Gegenstände aus Aluminium, Magnesium oder Titan mit einer mit Fluorpolymeren gefüllten Oxidkeramikschicht und Verfahren zu ihrer Herstellung. Beschrieben werden Gegenstände aus dem Sperrschicht-bildenden Metall mit einer dünnen festhaftenden Sperrschicht auf dem Metall, auf der sich eine gesinterte dichte Oxidkeramikschicht und darauf eine Oxidkeramikschicht mit einem weitmaschig verknüpften Kapillarsystem befindet, das im wesentlichen mit Fluorpolymeren gefüllt ist. Die Oxidkeramikschicht hat insbesondere ein Dicke von 40 bis 150 µm. Beispiele solcher Gegenstände sind Rotoren für Turbomolekularpumpen, Turbolader für Diesel- oder Benzinmotoren, Bauteile aus Vakuum- oder Plasmatechnik, Walzen für Koronarentladungen und Uitraschallisonotoden, jeweils aus Aluminium oder Aluminiumlegierungen. Es wird beschrieben, dass man in die äußere Oxidkeramikschicht einzubringende Teilchen des Fluorpolymeren oder seiner Vorstufe, sofern es sich nicht um Flüssigkeiten handelt, als Lösung oder Suspension in einem geeigneten Lösungsmittel einbringt. Wesentlicher Kern dieser Beschreibung ist es, die Teilchen von Fluorpolymeren in einem geeigneten Lösungsmittel wechselnden Druckbedingungen auszusetzen, wofür sich ein Imprägniersystem eignet, bei dem zunächst mittels Vakuum die Luft aus dem Kapillarsystem der Oxidkeramikschicht entfernt wird und anschließend unter Einwirkung des Vakuums, die Teilchen in die Poren eindringen und nach dem das Vakuum aufgehoben ist, durch den atmosphärischen Druck in Poren gepresst und somit auch feine Verästelungen erreichen sollen.

Als besonders geeignete Fluorpolymere werden insbesondere die Polymeren und Copolymeren von Tetrafluorethylen, Hexanfluorpropen, Vinylidenfluorid, Vinylfluorid und Trifluorchlorethylen beschrieben. Diese Fluorpolymere sind bekanntermaßen in praktisch keinem Lösungsmittel löslich, so dass davon auszugehen ist, dass gemäß der DE 42 39 391 C2 diese für Polymere in Form von Dispersionen in die Oberfläche eingebracht werden.

Ein ähnliches Verfahren wird in dem japanischen Patent JP 2,913,537 beschrieben. Ein korrosionsbeständiger Aufbau ist dadurch gekennzeichnet, dass in einem in Kontakt mit Chlorgas kommenden Aluminium/Legierungsteil einer Turbomolekularpumpe zum Entlassen von Chlorgas bei Halbleiterherstellungs-Vorrichtungen eine plattierte Schicht aus Ni-P-Legierung mit einer Dicke von etwa 20 µm vorgesehen ist, und das auf der plattierten Schicht eine Fluorharz-Schutzschicht dadurch gebildet ist, dass ein Rotor und ein Stator der Turbomolekularpumpe in eine Flüssigkeit zum Bilden der Schicht aus Fluorharz eingetaucht und daraufhin getrocknet werden.

Dem vorgenannten Stand der Technik ist gemeinsam, dass sich die Fluorpolymere im wesentlichen auf der äußeren Oberfläche der oxidkeramischen befindlichen Schicht, jedoch nur zu einem geringen Anteil in die Verästelungen eindringen.

Die Aufgabe der vorliegenden Erfindung besteht somit in einer Verbesserung der Gleichmäßigkeit, Beschichtung und damit der Abdichtung von Gegenständen, insbesondere oxidkeramischen Schichten.

Die vorgenannte Aufgabe wird in einer ersten Ausführungsform gelöst durch ein Verfahren zur Beschichtung von Gegenständen aus Ventilmetallen aus Al, Mg, Ti, Nb und/oder Zr oder deren Legierungen mit einer dünnen Sperrschicht aus dem Metall und einen darauf befindlichen Oxidkeramikschicht, deren Oberfläche mit Fluorpolymeren beschichtet ist, dadurch gekennzeichnet, dass man die Fluorpolymere in Form einer Lösung durch Vakuumimprägnierung in das Kapillarsystem der Oxidkeramikschicht einbringt und nach Entfernung der nicht benetzenden Lösungsanteile trocknet.

Durch die Nachbehandlung von insbesondere anodisch erzeugtem Oxid- oder Keramikschichten mittels Vakuumimprägnierung mit Lösungen von Fluorpolymeren können die Eigenschaften bezüglich der Dichtigkeit der Schutzschichten gegenüber dem Stand der Technik wesentlich verbessert werden. Ein weiterer Vorteil bei der Anwendung der beschriebenen Polymere liegt in deren extrem hohen Beständigkeiten gegenüber aggressiven und korrosiven Medien. Diesen Medien können beispielsweise beim Einsatz von Turbomolekularpumpen in Plasmaätzern gasförmig sein aber auch Flüssigkeiten oder Dämpfe von Säuren oder Alkalien umfassen.

In gleicher Weise ist auch die Imprägnierung mit Fluorpolymeren in gelöster Form möglich, ohne die Notwendigkeit der vorherigen Beschichtung oxidischer oder keramischer Art. Auch die so behandelten Oberflächen zeichnen durch besondere Eigenschaften wie das Abweisen von Schmutz oder Staubpartikeln sowie Unbenetzbarkeit durch Medien wie Wasser, Öle oder andere Flüssigkeiten aus.

Mit Hilfe der vorliegenden Erfindung ist es möglich, gegenüber dem Stand der Technik die Gleichmäßigkeit der Benetzung signifikant zu verbessern. Hierzu dient die Vakuumimprägnierung der obengenannten Schichten bei der das gelöste Fluorpolymere in die Poren bzw. mikroskopisch kleine Hohlräume der Schichten eindringt.

Die Vorteile der erfindungsgemäßen Beschichtungen liegen insbesondere in der sehr niedrigen Oberflächenenergie. Sie resultiert in einer optimalen Sperrwirkung gegenüber beinahe allen Lösungsmitteln, zu denen insbesondere Lösemittel, Öle (auch Silikonöle) sowie Flüssigkeiten auf Wasserbasis zählen. Auch Feststoffe können sich nur sehr schwer auf der Oberfläche des Films ablagern. Die gleiche Eigenschaft bewirkt darüber hinaus eine sehr gute Haftung auf den Ventilmetallen. Weiterhin ist hervorzuheben die hohe chemische, thermische und elektrische Stabilität, die von den üblichen Betriebsbedingungen unbeeinflusst bleibt, denen die behandelten Oberflächen ausgesetzt sind.

Im Sinne der vorliegenden Erfindung wird als Ventilmetall Aluminium, Magnesium, Titan, Niob oder Zirkonium und deren Legierungen eingesetzt.

Besonders hervorzuheben ist an dieser Stelle Aluminium und Aluminiumlegierungen, die häufig für die Herstellung von Rotoren in Turbomolekularpumpen eingesetzt werden.

Unter Aluminium und dessen Legierungen werden im Rahmen der vorliegenden Erfindung Reinstaluminium und Legierungen AlMn; AlMnCu; AlMg₁; AlMg_{1,5}; E-AlMgSi; AlMgSi_{0,5}; AlZnMgCu0,5; AlZnMgCu_{1,5}; G-AlSi-₁₂; G-AlSi₅MG, G-AlSi₈Cu₃, G-AlCu₄Ti; G-AlCu₄TiMg verstanden

Für die Zwecke der Erfindung eignen sich femer außer Reinmagnesium insbesondere die Magnesiumgusslegierungen der ASTM-Bezeichnungen AS41, AM60, AZ61, AZ63, AZ81, AZ91, AZ92, HK31, QE22, ZE41, ZH62, ZK51, ZK61, EZ33, HZ32 sowie die Knetlegierungen AZ31, AZ61, AZ80, M1 ZK60, ZK40.

Desweiteren lassen sich Reintitanium oder auch Titanlegierungen wie TiAl₆V4, TiAl₅Fe_{2,5} und andere einsetzen.

Besonders bevorzugt im Sinne der vorliegenden Erfindung ist die Oxidkeramikschicht aus einem mehr oder weniger gradiertem Material hergestellt, bei dem die Oxidkeramikschicht auf der Seite der Sperrschicht dicht gesintert ist und auf der gegenüberliegenden Seite über ein weitmaschig verknüpftes Kapillarsystem aufweist. Entsprechende Oxidkeramikschichten sind beispielsweise aus der DE 42 39 391 C2 bekannt.

Auch im Sinne der vorliegenden Erfindung werden Oxidkeramikschichten mit einer Dicke von 40 bis 150 µm, insbesondere 50 bis 120 µm eingesetzt, wie sie auch aus der DE 42 39 391 C2 bekannt sind.

Die Fluorpolymere, die im Sinne der vorliegenden Erfindung eingesetzt werden können, sind vorzugsweise ausgewählt aus fluorierten Epoxid-Polymeren, Silylethern, insbesondere fluoraliphatischen Silylethern, Polyacrylaten und/oder Urethanen.

Unter der Bezeichnung Fluorad™ werden von der Firma 3M eine Reihe von verschiedenen Fluorpolymern vertrieben. Fluorad™ FC-405/60 wird als konzentrierte Lösung eines fluoraliphatischen Silylethers beschrieben, der sich mit Alkohol, Ketonen, Acetat verdünnen und auch in Wasser auflösen lässt. Fluorad™FC-722 wird als fluoriertes Acrylpolymer in einem inerten fluorierten Lösungsmittel beschrieben. Als Thermoplast trocknet das Mittel nicht aus, wodurch höhere Temperaturen und exotherme Reaktionen durch UV- oder Niedrigtemperatursysteme überflüssig werden. Fluorad™FC-725 wird als fluoriertes Acrylat-Polymer in Butylacetat beschrieben. Es handelt sich dabei um ein einkomponentiges gelöstes Polymer mit einer unbegrenzten Haltbarkeit.

Besonders bevorzugt im Sinne der vorliegenden Erfindung werden die Fluorpolymere in einer Schichtdicke von 1 bis 20 µm, insbesondere 1 bis 5 µm aufgebracht. Bei den Polyacrylaten ist eine besonders geringe Schichtdicke von besonderem Vorteil. Hier ist es beispielsweise möglich, diese auch in einer Schichtdicke von 1 bis 2 µm aufzubringen.

Zum Imprägnieren der Gegenstände können verschiedene Verfahren eingesetzt werden. Das jeweils ausgewählte Verfahren hängt von den zu verwendenden Fluorpolymeren und den Anforderungen an die Gegenstände ab.

Das Trockenvakuum/Druck-Imprägnierverfahren ist das langsamste und komplizierteste Vakuumimprägnierverfahren. Der nachfolgend beschriebene Prozess der Vakuumimprägnierung erfordert zwei Tanks, einen Vorratstank für die Lösung des Fluorpolymeren und einen, in dem die Gegenstände/Werkstücke imprägniert werden:
■ Vakuumziehen im Imprägnierbehälter, um die Luft aus den Poren der Gegenstände zu entfernen;
■ Umfluten der Lösung des Fluorpolymeren aus dem Vorratsgang in den Imprägnierbehälter, bis die noch immer im Vakuum befindlichen Werkstücke überflutet sind;
■ Imprägnierbehälter belüften und anschließend mit Druckluft unter Druck setzen;
■ mit Hilfe des Überdrucks die Lösung des Fluorpolymeren in den Vorratsbehälter zurückfluten, und anschließend auf Normaldruck entlüften;
■ Gegenstände entnehmen und abspülen;
■ weitere Verfahrensschritte durchführen.

Das Trocken-/Vakuum-Verfahren wird vorzugsweise bei hochviskosen Lösungen von Fluorpolymeren eingesetzt. Besonders bevorzugt wird dieses Verfahren auch im Sinne der vorliegenden Erfindung dann eingesetzt, wenn die Poren sehr klein und die Anforderungen an die beschichteten Gegenstände ungewöhnlich hoch sind.

Beim Nassvakuum-/Druck-Verfahren ist nur ein Tank erforderlich. Die Gegenstände tauchen in die Lösung des Fluorpolymeren ein, die ständig im Imprägnierbehälter verbleibt. Die Gegenstände und die Lösung des Fluorpolymeren werden gemeinsam unter Vakuum und anschließend mit Druckluft unter Druck gesetzt:
■ Vakuumziehen im Imprägnierbehälter, um die Luft aus den Poren der Teile zu entfernen;
■ auf Normaldruck belüften und anschließend Tank mit Druckluft unter Druck setzen;
■ auf Normaldruck entlüften;
■ Werkstücke entnehmen und abspülen;
■ weitere Verfahrensschritte durchführen.

Das Nassvakuum-/Druck-Verfahren wird beispielsweise zum Imprägnieren von Gegenständen mit sehr kleinen Poren und für Sintermetall-Teile mit hoher Dichte empfohlen.

Das Nassvakuum-Verfahren ist die einfachste und schnellste Vakuumimprägnier-Methode. Sie ist mit dem Nassvakuum-/Druck-Verfahren vergleichbar; der Tank wird jedoch nicht unter Druck gesetzt. Stattdessen wird der Imprägnierbehälter nach dem Vakuum lediglich belüftet. Das Dichtungsmaterial dringt bei atmosphärischem Druck in die Teile ein. Die Lösung des Fluorpolymeren fließt in das in den Poren der Teile entstandene Vakuum und spült es aus:
■ Vakuumziehen, um die Luft aus den Poren zu entfernen;
■ auf Normaldruck belüften;
■ Teile kurz im Imprägnierbehälter belassen, damit die Lösung des Fluorpolymeren eindringt;
■ Werkstücke entnehmen und abspülen;
■ weitere Verfahrensschritte durchführen.

Die Nassvakuumimprägnierung ist mit Abstand das bevorzugte Verfahren. Ihre Einfachheit und Schnelligkeit sowie der Vorteil niedriger Anlagekosten machen sie zum bevorzugten Verfahren, wenn das Imprägniersystem neu installiert wird.

Im Anschluss an die Vakuumimprägnierung entfernt man die nicht benetzenden Lösungsanteile, gegebenenfalls bei erhöhter Temperatur das Lösungsmittel entfernt. Beispielsweise kann eine fluoraliphatische Beschichtung wie die des Fluorad™FC-405/60 innerhalb einer kurzen Zeitspanne von 5 bis 10 min bei 110 °C oder im Verlauf von 24 Stunden bei Raumtemperatur getrocknet werden.

Zur Erhöhung der Schichtdicke ist es selbstverständlich auch möglich, die Schritte des Einbringens und des Trocknens der Fluorpolymere mehrfach zu wiederholen.

Die Erfindung umfasst in einer weiteren Ausführungsform Gegenstände aus Ventilmetallen, die nach dem obengenannten Verfahren erhältlich sind. Besonders bevorzugt im Sinne der vorliegenden Erfindung handelt es sich dabei um Rotoren für Turbomolekularpumpen, die meist aus Aluminium oder Aluminiumlegierungen hergestellt werden.

Mit Hilfe der vorliegenden Erfindung werden Gegenstände erhältlich, die sich durch einen äußerst niedrigen Scheinleitwert der Oberfläche auszeichnen, wie durch vergleichende Messungen des Scheinleitwerts von unbehandelten Oxidschichten und Vakuum-imprägnierten Oxidschichten gezeigt werden konnte.

Bei der Vakuumimprägnierung ist die komplette Füllung der Poren in der oxidischen Schicht und somit der gesamten Oberfläche gewährleistet.

Bei den Porenabmessungen von plasmachemisch erzeugten Schichten, insbesondere bei hartanodischen Oxidschichten, ist diese Vorgehensweise besonders vorteilhaft.

Die klassische Tauchbehandlung erreicht nur die benetzbare Oberfläche, dringt aber nicht in die Poren (hier besonders in die Poren hartanodischer Schichten) ein.

Hierzu werden Tests an plasmaoxidischen Schichten durchgeführt, die einen Unterschied zeigten:

Ein Scheinleitwert von 42 µS wurde bei einer Tauchbehandlung mit thermischer Nachbehandlung bei 110 +/- 10 °C über einen Zeitraum von 30 min gegenüber 7 µS bei einer erfindungsgemäßen Vakuumimprägnierung ermittelt.

### Ausführungsbeispiele:

### Beispiel 1/Vergleichsbeispiel 1:

Ein Probeblech aus der Aluminiumlegierung AlMgSi1 wurde in einem Normal-Standardelektrolyten anodisch oxidiert und eine Schichtdicke von durchschnittlich 25 µm ermittelt. Das Probeblech wurde getrocknet und der Scheinleitwert zu 140 µS bestimmt (Vergleichsbeispiel 1).

Danach wurde das Probeblech in eine Lösung des kommerziell erhältlichen fluorierten Acrylats Flurad™ FC-732 bei einem Druck von < 0,1 mbar Vakuumimprägniert und anschließend bei einer Temperatur von +/- 10°C im Verlauf von 30 min behandelt und ebenfalls der Scheinleitwert ermittelt. Es ergab sich ein Scheinleitwert nach dem Vakuumimprägnieren von 10 µS (Beispiel 1).

Zur vergleichenden Bestimmung des Scheinleitwertes wurde eine Messzelle mit einer Kontaktfläche von 2,3 mm Durchmesser verwendet. Als Hilfselektrolyte diente eine Kaliumsulfatlösung. Für die Messung selbst wurde ein "Anotest YD" der Firma Fischer eingesetzt.

### Beispiel 2/Vergleichsbeispiel 2:

Ein Probeblech aus der Aluminiumlegierung gemäß Beispiel 1/Vergleichsbeispiel 1 wurde mit einer 20 µm dicken Plasma-oxidischen Schicht beschichtet. Die Probe wurde ebenfalls getrocknet und der Scheinleitwert zu durchschnittlich 35 µS bestimmt (Vergleichsbeispiel 2).

Danach wurde die Probe wie in Beispiel 1 beschrieben Vakuum-imprägniert und thermisch behandelt. Anschließend wurde der Scheinleitwert zu < 3 µS ermittelt (Beispiel 2).

## Patentansprüche

1. Verfahren zur Beschichtung von Gegenständen aus Ventilmetallen aus Aluminium, Magnesium, Titan, Niob und /oder Zirkonium und deren Legierungen mit einer dünnen Sperrschicht aus dem Metall und einer darauf befindlichen Oxidkeramikschicht, deren Oberfläche mit Fluorpolymeren beschichtet ist, **dadurch gekennzeichnet, dass** man die Fluorpolymere in Form einer Lösung durch Vakuumimprägnierung in das Kapillarsystem der Oxidkeramikschicht einbringt und nach Entfernung der nicht benetzenden Lösungsanteile trocknet.

2. Verfahren nach Anspruch 1, **dadurch gekennzeichnet, dass** man eine Oxidkeramikschicht einsetzt, die aus einer dichten gesinterten Oxidkeramikschicht auf der Sperrschicht und einer auf der dicht gesinterten Oxidkeramikschicht befindlichen oxidkeramikschicht mit einem weitmaschig verknüpften Kapillarsystem besteht, die durch plasmachemische anodische Oxidation aufgebracht wurde.

3. Verfahren nach Anspruch 1 oder 2, **dadurch gekennzeichnet, dass** man eine Oxidkeramikschicht mit einer Dicke von 40 bis 150 µm, insbesondere 50 bis 120 µm einsetzt.

4. Verfahren nach einem der Ansprüche 1 bis 3, **dadurch gekennzeichnet, dass** man Fluorpolymere einsetzt, die ausgewählt sind aus fluorierten Epoxid-Polymeren, Silylethern, insbesondere fluoraliphatischen Silylethern, Polyacrylaten und/oder Urethanen.

5. Verfahren nach einem der Ansprüche 1 bis 4, **dadurch gekennzeichnet, dass** man die Fluorpolymere in einer Schichtdicke von 1 bis 20 µm, insbesondere 1 bis 5 µm aufbringt.

6. Verfahren nach einem der Ansprüche 1 bis 5, **dadurch gekennzeichnet, dass** man die Schritte des Einbringens und des Trocknens der Fluorpolymere mehrfach wiederholt.

7. Gegenstand aus Ventilmetallen erhältlich nach einem Verfahren gemäß einem der Ansprüche 1 bis 6.

8. Gegenstand nach Anspruch 7, **dadurch gekennzeichnet, dass** er ein Rotor aus Aluminium oder Aluminiumlegierungen für Turbomolekularpumpen ist.

## Claims

1. A process for the coating of objects made of valve metals selected from aluminum, magnesium, titanium, niobium and/or zirconium and their alloys with a thin barrier layer consisting of the metal and an oxide ceramic layer provided thereon whose surface has been coated with fluoropolymers, **characterized in that** the fluoropolymers are introduced into the capillary system of the oxide ceramic layer in the form of a solution by vacuum impregnation, followed by removing the non-wetting portions of the solution and drying.

2. The process according to claim 1, **characterized by** employing an oxide ceramic layer which consists of a densely sintered oxide ceramic layer on the barrier layer and, on top of said densely sintered oxide ceramic layer, an oxide ceramic layer having a wide-meshed interlinked capillary system which has been applied by plasma-chemical anodic oxidation.

3. The process according to claim 1 or 2, **characterized by** employing an oxide ceramic layer having a thickness of from 40 to 150 µm, especially from 50 to 120 µm.

4. The process according to any of claims 1 to 3, **characterized by** employing fluoropolymers which are selected from fluorinated epoxide polymers, silyl ethers, especially fluoroaliphatic silyl ethers, polyacrylates and/or urethanes.

5. The process according to any of claims 1 to 4, **characterized in that** the fluoropolymers are applied in a layer thickness of from 1 to 20 µm, especially from 1 to 5 µm.

6. The process according to any of claims 1 to 5, **characterized in that** the steps of introducing and drying the fluoropolymers are repeated several times.

7. An object consisting of valve metals and obtainable by a process according to any of claims 1 to 6.

8. The object according to claim 7, **characterized by** being a rotor of aluminum or aluminum alloys for turbo-molecular pumps.

## Revendications

1. Procédé permettant de revêtir des objets en un métal valve, choisi parmi aluminium, magnésium, titane, niobium et/ou zirconium et leurs alliages, d'une mince couche barrière en le métal et d'une couche d'oxyde céramique qui est disposée par-dessus et dont la surface est revêtue de polymères fluorés, **caractérisé en ce qu'**on fait pénétrer ces polymères fluorés, sous forme de solution, par imprégnation sous vide, dans le système de capillaires de la couche d'oxyde céramique, et **en ce qu'**on fait sécher le tout après avoir éliminé la fraction non mouillante de la solution.

2. Procédé conforme à la revendication 1, **caractérisé en ce que** la couche d'oxyde céramique employée se compose d'une couche dense d'oxyde céramique fritté, disposée sur la couche barrière, et d'une autre couche d'oxyde céramique, disposée sur la première couche dense d'oxyde céramique fritté et dotée d'un système de capillaires formant un réseau à larges mailles, qui a été déposée par oxydation anodique au plasma.

3. Procédé conforme à la revendication 1 ou 2, **caractérisé en ce que** la couche d'oxyde céramique employée est épaisse de 40 à 150 µm, et en particulier de 50 à 120 µm.

4. Procédé conforme à l'une des revendications 1 à 3, **caractérisé en ce que** l'on emploie des polymères fluorés qui sont choisis parmi les polymères époxydes fluorés, les éthers de silyle, en particulier les éthers de silyle fluoroaliphatiques, les polyacrylates et/ou les polyuréthanes.

5. Procédé conforme à l'une des revendications 1 à 4, **caractérisé en ce que** l'on dépose les polymères fluorés en une couche épaisse de 1 à 20 µm, et en particulier de 1 à 5 µm.

6. Procédé conforme à l'une des revendications 1 à 5, **caractérisé en ce que** l'on répète à plusieurs reprises les étapes de pénétration des polymères fluorés et de séchage.

7. Objet en métal valve, fabriqué selon un procédé conforme à l'une des revendications 1 à 6.

8. Objet conforme à la revendication 7, **caractérisé en ce qu'**il s'agit d'un rotor en aluminium ou en alliage d'aluminium pour pompes turbomoléculaires.
